# EUROPEAN PATENT APPLICATION

(11) **EP 4 797 150 A1**
(43) Date of publication of application: **26.08.2026**
(21) Application number: 25305235.1
(22) Date of filing: 21.02.2025
(51) Int. Cl.: G06K 19/02, G06K 19/077, B32B 17/06, C03C 3/00

(54) **DATA CARRIER WITH TEMPERED GLASS LAYER**

(71) Applicant: THALES DIS FRANCE SAS, 92190 Meudon (FR)
(72) Inventor: BUYUKKALENDER, Arek, 13190 Allauch (FR); MERIDIANO, Jean-Luc, 83170 Tourves (FR); COLOMBARD, Claude, 84120 Pertuis (FR); SEBAN, Frédérick, 13390 Auriol (FR)
(74) Representative: Castelo, Jérôme

(57) **Abstract**

A data carrier with a top surface and a bottom surface, said data carrier comprising:
- a metal layer;
- at least one electronic module;
- at least one antenna;
wherein the data carrier comprises at least a first tempered glass layer, said tempered glass layer being located between the metal layer and the at least one antenna.

## Description

### TECHNICAL FIELD

The present invention relates to a data carrier according to claim 1, to a secure article comprising or consisting of such a data carrier according to claim 14, and to a method of producing a data carrier according to claim 15.

### PRIOR ART

Data carriers such as smart cards or banking cards typically includes an electronic module such as embedded integrated circuit (IC) chip. These cards communicate with card readers through direct contact or contactless radio frequency (RF) interfaces.

There are three main types of smart cards. The first type is the "contact smart cards", which have an IC chip connected to physical contact pads on the card's surface. They require insertion into a card reader for data transmission. The second type is the contactless smart cards, which have an IC chip and an antenna for wireless communication with a card reader via RF signals, requiring only close proximity to the reader. The third type is dual-interface smart cards, which combine both contact and contactless features, allowing access to the IC chip through either method.

A recent trend in the field of such smart card, notably dual-interface smart card, is the integration of metal in order to improve the appearance and the premium feeling for the end user. A metal layer provides a desirable weight and a decorative pattern and/or reflective surface enhancing the card's appearance and aesthetic value. This is especially desirable for use by high-end customers. It is therefore desirable to make dual interface (contacts and contactless) smart cards having a metal layer. The inclusion of a metal layer in dual-interface smart cards, while aesthetically pleasing, introduces significant challenges related to radio frequency (RF) interference. This interference affects the card's ability to communicate wirelessly with card readers. Indeed, metal layers absorb and reflect RF signals, weakening the signal strength. This attenuation can hinder or completely block the communication between the card's IC chip and the reader's antenna. Furthermore, the metal layer can create complex interference patterns due to multiple reflections within the card's layers. These patterns can cause destructive interference, further weakening the effective signal reaching the IC chip.

A solution known from the state of the art to these interferences consists in incorporating a shielding layer inside dual-interface smart card. The shielding layer blocks unwanted RF signals generated by the metal layer by creating a barrier. This barrier blocks or redirects the electromagnetic interference (EMI) generated by the metal layer, thus protecting the integrity of the RF signals used for contactless communication.

This solution aims to balance the need for a metal layer's aesthetic appeal and the functional requirement for reliable RF communication.

However, there is still a need for alternative solutions that could answer this need of increased weight, aesthetic appearance and reduced interference.

### SUMMARY OF THE INVENTION

It is an object of the present invention to overcome the drawbacks of the prior art. In particular, it is an object of the present invention to provide an optimized data carrier comprising a metallic layer.

This object is achieved with a data carrier according to claim 1. The invention is defined as being a data carrier with a top surface and a bottom surface, said data carrier comprising a metal layer. The use of metal increases the overall weight of the data carrier. The data carrier also comprises at least one electronic module and at least one antenna.

The data carrier further comprises at least a first tempered glass layer. Tempered glass is a type of safety glass that is processed through controlled thermal or chemical treatments to increase its strength compared to regular, or annealed, glass. The tempering process makes it significantly stronger and more resistant to impact, heat, and pressure. The tempered glass increases the overall weight of the data carrier. Indeed, the use of tempered glass allows to bring more weight to the data carrier as said tempered glass is likely to have a higher density than polymers used in the data carrier known from the state of the art such as notably PVC. Therefore, by using a tempered glass layer as described in the present invention, the total weight of the data carrier is increased compared to a data carrier with similar thickness and traditional plastic structure. Increasing card weigh is one of the main objectives in the field of data carrier with metal, notably banking card with metal, as it brings a premium feeling to the end user. The tempered glass layer is configured to interfere or impede with RF transmission in order to block or redirect the electromagnetic interference (EMI) generated by the metal layer. In other words, due to its physical properties, the tempered glass layer acts as a shielding layer and blocks unwanted RF signals generated by the metal layer by creating a barrier. The tempered glass is non electrically conductive. Furthermore, the tempered glass layer is located between the metal layer and the at least one antenna. In other words, the tempered glass layer is placed below the metal layer, i.e. towards the interior of the card, to act as a shield to prevent or reduce the metal layer from interfering with radio frequency radiation to and from the data carrier. As such, the data carrier as defined by the present invention allows to answer the need of a data carrier with increased weight, aesthetic appearance and reduced interference.

Preferably, the tempered glass layer is a polarized tempered glass layer. Polarization in a polarized tempered glass layer refers to the selective filtering of light waves so that only specific orientations of electromagnetic waves pass through while others are blocked. It has been discovered by the applicant that a polarized tempered glass layer would have better RF shielding properties than a non-polarized tempered glass layer. Therefore, at least for the purpose of preventing or reducing the metal layer from interfering with radio frequency radiation to and from the data carrier, a polarized tempered glass layer is preferred.

Advantageously, the metal layer forms the top surface of the data carrier. This positioning of the metal layer on the top of the data carrier improves the appearance and the premium feeling for the end user.

Preferably, the data carrier comprises a light source. Such light source can have various purposes. For example, the illumination can provide immediate visual feedback to the user, confirming that the card is functioning correctly during contactless payments. Such lighting effect adds an element of delight, making the payment process more engaging and enjoyable for users. Therefore, incorporating light source into metal banking cards not only enhances functionality but also elevates the overall user experience. The light source can advantageously be an LED.

Preferably, the light source is connected to the antenna. The light source can advantageously be connected to an independent antenna. More preferably, the light source is in contact with the first tempered glass layer such that it can illuminate said first tempered glass layer. In such configuration, the light emitted from the light source can pass through the tempered glass layer which serves as a light guiding element. The polarized tempered glass layer also gives satisfying results as light guiding element.

Advantageously, the data carrier comprises a second tempered glass layer. The addition of a second tempered glass layer further increases the advantages brought by the first tempered layer glass, notably the increased weight of the data carrier. This second tempered glass layer can also be polarized.

Preferably, the second tempered glass layer forms the bottom surface of the data carrier. Due to the durability and scratch resistance properties of tempered glass, such configuration allows to form a data carrier with high resistance and provide a premium feel to the end user.

In addition, the data carrier can comprise a second light source in contact with the second tempered glass layer such that it can illuminate said second tempered glass layer. The advantage of this configuration is that the visual effect can be observed on the bottom surface of the data carrier.

Advantageously, the metal layer comprises an opening, the at least one electronic module being positioned at least partially within the opening. Preferably, the tempered glass layer also comprises an opening which is substantially aligned with the opening of the metal layer according to an extension direction (E) of the data carrier.

Preferably, the antenna is in physical connection with the electronic module. In this configuration, the connecting means allowing the physical connection between the antenna and the electronic module extend through the opening of the tempered glass layer. Said connecting means are known from the state of the art and can notably be ACF or silver glue.

The dimensions of the different layers of the data carrier can vary depending of the wanted effect. Advantageously, an expansion area of the metal layer corresponds to an expansion area of the data carrier with respect to a transverse direction (T) running perpendicularly to an extension direction (E) of the data carrier. In other words, the metal layer covers the full surface of the data carrier. This configuration allows to see the metal on the edge of the data carrier, which increase the premium feeling of the end user. Preferably, an expansion area of the tempered glass layer corresponds to an expansion area of the metal layer with respect to a transverse direction (T) running perpendicularly to an extension direction (E) of the data carrier. In other words, the tempered glass layer covers the full surface of the metal layer. This configuration is advantageous with respect to the shielding properties of the tempered glass layer. This can apply to both the first and second tempered glass layers as each of said tempered glass layers can cover the full surface of the metal layer and/or the full surface of the data carrier.

Advantageously, an expansion area of the tempered glass layer corresponds to an expansion area of the data carrier with respect to a transverse direction (T) running perpendicularly to an extension direction (E) of the data carrier. In other words, the tempered glass layer covers the full surface of the data carrier. Furthermore, in a preferred configuration where the at least first tempered glass layer cover the full surface of the data carrier, and in which the data carrier comprises a light source which is in contact with said first tempered glass layer such that it can illuminate it, the visual effect can be observed on the lateral edge of the data carrier. Indeed, the tempered glass layer will guide the light to the edge of the card such that said edge of the data carrier illuminates.

Advantageously, the metal layer has a thickness comprised between 0.1 mm and 0.5 mm. Such thickness allows to reach the requirement in term of total thickness of the data carrier when said data carrier is used as banking card, while increasing the total weight of said data carrier.

Preferably, the first tempered glass layer has a thickness comprised between 0.2 mm and 0.55 mm. With such thickness, said tempered glass layer significantly interfere with radio frequency signals coming from a reader or from the antenna such that the shielding of the upper metal layer is further improved.

Advantageously, the first tempered glass layer has a density superior to 2 g/cm3. This density allows to emphasize the general weight increase of the data carrier. Preferably, the first tempered glass layer has a density comprised between 2.4 g/cm3 and 2.6 g/cm3. This further increase the general weight of the data carrier.

According to another aspect, the invention concerns a secure article comprising or consisting of at least one data carrier as previously disclosed. The secure article is preferably is a smart card.

According to yet another aspect, the invention concerns a method of producing a data carrier as previously disclosed. The method preferably comprises the steps of:
- providing a metal layer;
- providing at least one electronic module;
- providing at least one antenna;
- providing at least a first tempered glass layer;
wherein the method comprises a step of providing at least a first tempered glass layer, said tempered glass layer being located between the metal layer and the at least one antenna.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows a data carrier according to the invention in a cross section view;
- Fig. 2: shows a second data carrier according to the invention in a cross section view;
- Fig. 3: shows a third data carrier according to the invention in a cross section view;

### DESCRIPTION OF PARTICULAR EMBODIMENTS

Aspects of the invention shall be further illustrated with reference to the figures.

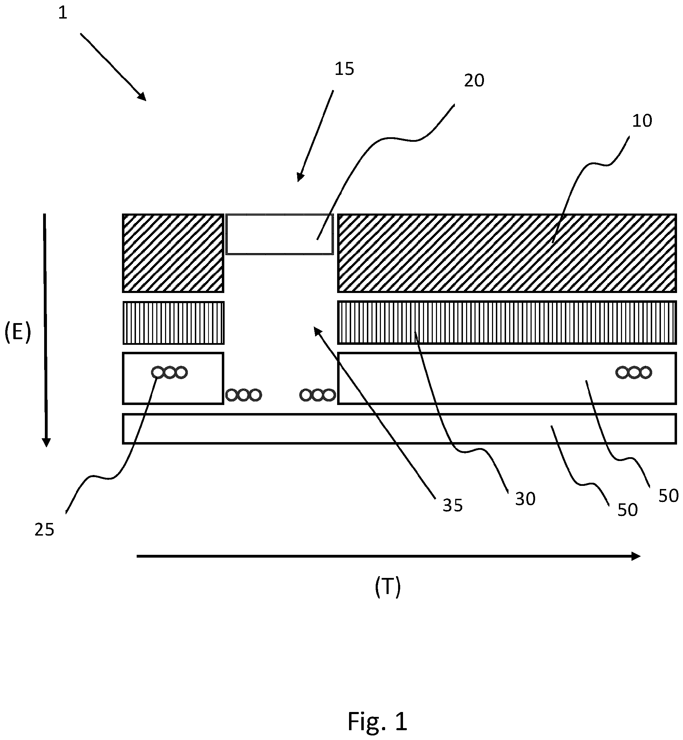

Figure 1 depicts a first data carrier 1 according to the invention in a cross-section view. The data carrier 1 comprises_a metal layer 10 having an upper surface 12 defining the upper surface 2 of said data carrier 1. The metal layer comprises an opening 15 in which is positioned an electronic module 20. The electronic module 20 flushes the upper surface 2 of the data carrier 1. Said electronic module 20 is an IC chip module. The data carrier 1 further comprises an antenna 25. The antenna 25 is at least partially embedded in a plastic layer 50. Another plastic layer 50 forms the lower surface of the data carrier 1. Finally, the data carrier 1 comprises a tempered glass layer 30 disposed between the metal layer 10 and the at least one antenna 25. The tempered glass increases the overall weight of the data carrier. Furthermore, due to its positioning and its physical properties, the tempered glass layer acts as a shielding layer and blocks unwanted RF signals generated by the metal layer by creating a barrier.

The tempered glass layer 30 comprises an opening 35 which is substantially aligned with the opening 15 of the metal layer 10 according to an extension direction (E) of the data carrier 1. The antenna 25 is physically connected to the electronic module 20 by connecting means which extends through the opening 35 of the tempered glass layer 30. Said connecting means are not represented in the figures.

The data carrier 1 expands along an extension direction (E), corresponding to the thickness of the data carrier 1, and along a transverse direction (T) running perpendicularly to the extension direction (E). The expansion area of the metal layer 10 corresponds to the expansion area of the data carrier 1 with respect to the transverse direction (T), such that the metal layer 10 covers the full surface of the data carrier 1. The metal layer 10 is therefore visible on the edge of the data carrier 1. In the same way, the expansion area of the tempered glass layer 30 corresponds to the expansion area of the data carrier 1 with respect to the transverse direction (T), such that the tempered glass layer 30 covers the full surface of the data carrier 1. The tempered glass layer 30 is therefore visible on the edge of the data carrier 1.

The data carrier 1 according to the invention is a multilayer structure that can comprise several other layers than the ones discussed in the present description. For example, the data carrier 1 represented at figures 1 to 3 can comprise adhesive layers and compensation layers, which are not represented.

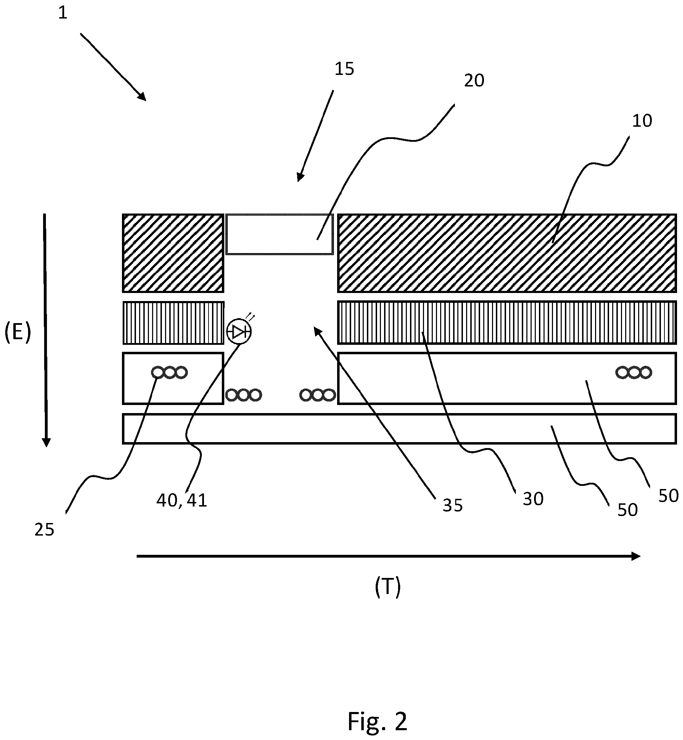

Figure 2 depicts a second data carrier 1 according to the invention in a cross-section view. The data carrier 1 of Fig. 2 is corresponds to the data carrier of fig. 1 in which a light source 40 is further included, said light source comprising a LED 41. The LED is in contact with the tempered glass layer 30 such that it can illuminate said first tempered glass layer 30. The light emitted from the light source can pass through the tempered glass layer which serves as a light guiding element. Furthermore, as the tempered glass layer 30 is visible on the edges of the data carrier 1, the visual effect provided by the LED can be observed on the lateral edge of the data carrier.

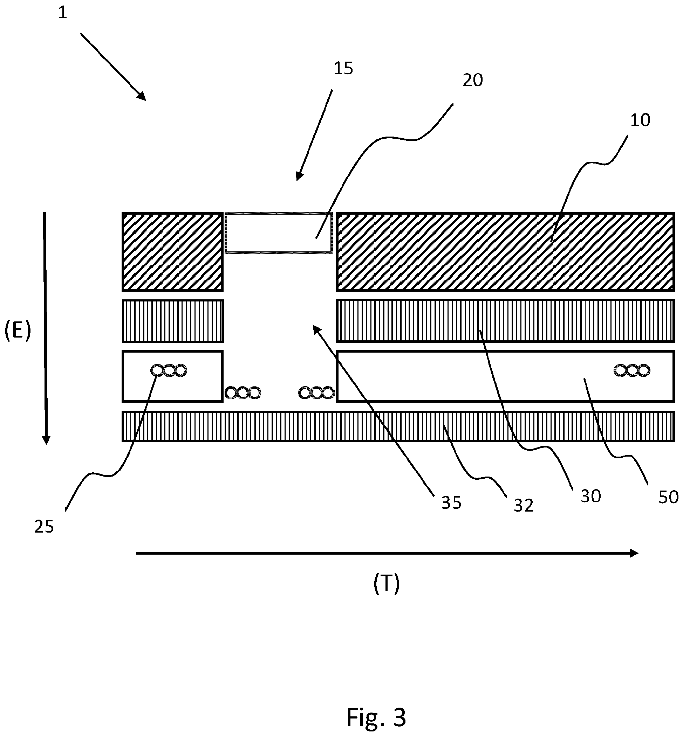

Figure 3 depicts a second data carrier 1 according to the invention in a cross-section view. The data carrier 1 of Fig. 3 is corresponds to the data carrier of fig. 1 in which a second tempered glass layer 32 is further included. In the representation of Fig. 3, the second tempered glass layer 32 comes in replacement of the lower plastic layer 50, but it could also be added to it. The second tempered glass 32 layer forms the bottom surface of the data carrier 1. Due to the durability and scratch resistance properties of tempered glass, such configuration allows to form a data carrier 1 with high resistance and provide a premium feel to the end user.

## Claims

1. A data carrier (1) with a top surface and a bottom surface, said data carrier comprising:
- a metal layer (10);
- at least one electronic module (20);
- at least one antenna (25);
wherein the data carrier (1) comprises at least a first tempered glass layer (30), said tempered glass layer (30) being located between the metal layer (10) and the at least one antenna (25).

2. A data carrier (1) according to any of the preceding claims, wherein the first tempered glass layer (30) is a polarized tempered glass layer.

3. A data carrier (1) according to the preceding claim, wherein the metal layer (10) forms the top surface of the data carrier (1).

4. A data carrier (1) according to any of the preceding claims, wherein it comprises a light source (40).

5. A data carrier (1) according to claim 4, wherein the light source (40) is in contact with the first tempered glass layer (30) such that it can illuminate said first tempered glass layer (30).

6. A data carrier (1) according to any of the preceding claim, wherein the data carrier (1) comprises a second tempered glass layer (32).

7. A data carrier (1) according to claim 6, wherein the second tempered glass layer (32) forms the bottom surface of the data carrier (1).

8. A data carrier (1) according to the preceding claim, wherein the metal layer (10) comprises an opening (15), the at least one electronic module (20) being positioned at least partially within the opening (15).

9. A data carrier (1) according to claim 8, wherein the tempered glass layer (30) comprises an opening (35) substantially aligned with the opening (15) of the metal layer (10) according to an extension direction (E) of the data carrier.

10. A data carrier (1) according to any of the preceding claims, wherein the antenna (25) is in physical connection with the electronic module (20).

11. A data carrier (1) according to any of the preceding claims, wherein an expansion area of the tempered glass layer (30) corresponds to an expansion area of the metal layer (10) with respect to a transverse direction (T) running perpendicularly to an extension direction (E) of the data carrier (1), and/or
wherein an expansion area of the metal layer (10) corresponds to an expansion area of the data carrier (1) with respect to a transverse direction (T) running perpendicularly to an extension direction (E) of the data carrier (1).

12. A data carrier (1) according to any of the preceding claims, wherein the metal layer (10) has a thickness comprised between 0.1 mm and 0.5 mm, and/or wherein the first tempered glass layer (30) has a thickness comprised between 0.2 mm and 0.55 mm.

13. A data carrier (1) according to any of the preceding claim, wherein the first tempered glass layer (30) has a density superior to 2 g/cm3, preferably comprised between 2.4 g/cm3 and 2.6 g/cm3.

14. A secure article (100) comprising or consisting of at least one data carrier (1) as claimed in any one of the preceding claims, wherein the secure article (100) preferably is a smart card.

15. A method of producing a data carrier (1), preferably a data carrier (1) as claimed in any one of claims 1 to 13, wherein the method comprises the steps of:
- providing a metal layer (10);
- providing at least one electronic module (20);
- providing at least one antenna (25);
- providing at least a first tempered glass layer (30);
wherein the method comprises a step of providing at least a first tempered glass layer (30), said tempered glass layer (30) being located between the metal layer (10) and the at least one antenna (25).
